# EUROPEAN PATENT SPECIFICATION

(11) **EP 3 167 324 B1**
(45) Date of publication and mention of the grant of the patent: **16.09.2020**
(21) Application number: 15734166.0
(22) Date of filing: 06.07.2015
(51) Int. Cl.: G02B 6/44, H05K 5/00

(54) **MODULAR CONNECTION SYSTEM FOR TELECOMMUNICATIONS EQUIPMENT**
MODULARES ANSCHLUSSSYSTEM FÜR TELEKOMMUNIKATIONSAUSRÜSTUNGEN
SYSTÈME DE CONNEXION MODULAIRE POUR ÉQUIPEMENT DE TÉLÉCOMMUNICATIONS

(30) Priority: 09.07.2014 US 201462022517 P
(43) Date of publication of application: 17.05.2017
(73) Proprietor: CommScope Connectivity Belgium BVBA, 3010 Kessel-Lo (BE); ADC Czech Republic s.r.o., 627 00 Brno (CZ)
(72) Inventor: PEETERS, Eric Lydia Paul, B-3001 Heverlee (BE); SEJBAL, Stepan, 56932 (CZ); HUYBRECHTS, Koen, B-3001 Heverlee (BE)
(74) Representative: Murgitroyd & Company
(86) International application number: PCT/EP2015/065299
(87) International publication number: WO 2016/005303

(56) References cited:
- EP-A1- 2 549 316
- GB-A- 2 140 494
- US-A- 4 632 594
- US-A1- 2005 180 814

## Description

### Cross-Reference to Related Application

The present application claims the benefit of U.S. Provisional Patent Application Serial No. 62/022,517, filed July 9, 2014.

### Field of the Invention

The present invention relates to telecommunications systems, e.g., optical fiber systems. More specifically, the present invention relates to a modular connection system for fixedly connecting two or more telecommunications elements.

### Background of the Invention

Optical fiber distribution systems may include fiber terminations and other equipment. Various concerns exist for the optical fiber distribution systems, including density, ease of use and mounting, and cable management. There is a continuing need for improvements in the telecommunications distribution area, especially optical fiber distribution area.

US 2005/0180814 A1 discloses a modular connection system for connecting two pieces of electric equipment, the connection system comprising an interface structure to be positioned between the two pieces of equipment, the interface structure defining a body with opposed faces and a stud on each face, the stud defining a stem portion and a flange portion having a larger profile than the stem portion; and a first slot positioned at a first surface of a first piece of equipment, the first slot defining a receiver portion and a retention portion, wherein the receiver portion is sized to accommodate the flange portion of the stud of said interface structure and the retention portion is sized to accommodate the stem portion but not the flange portion of the stud.

### Summary of the Invention

One implementation of a system in accordance with the examples of the disclosure includes a modular connection system that can be used to fixedly connect or stack two or more pieces of telecommunications equipment and that allows removal of the stacked equipment. Portions of the modular connection system may be provided integrally with the telecommunications equipment, wherein portions of the connection system are molded or fabricated with the equipment itself. In other embodiments, portions of the modular connection system may be provided as separate structures from the telecommunications equipment and may be fixed or fastened to the equipment via methods known in the art. Whether integrally formed or separately attached, the modular connection system allows two or more pieces of telecommunications equipment to be connected or stacked with a quick-connect type coupling arrangement and provides for separation of the equipment with a quick-release type arrangement.

According to one example aspect, the disclosure is directed to a modular connection system for connecting two pieces of telecommunications equipment so as to prevent relative sliding between the two pieces of telecommunications equipment and relative separation between the two pieces of telecommunications equipment that is in a direction generally perpendicular to the direction of the relative sliding. The connection system comprises an interface structure to be positioned between the two pieces of telecommunications equipment, the interface structure defining a body with opposed faces and a stud on each face, the stud defining a stem portion and a flange portion having a larger profile than the stem portion. A first slot is positioned at a first surface of a first piece of telecommunications equipment, the first slot defining a receiver portion and a retention portion, wherein the receiver portion is sized to accommodate the flange portion of the stud of an interface structure and the retention portion is sized to accommodate the stem portion but not the flange portion of the stud. A second slot is positioned at a second opposing surface of the first piece of telecommunications equipment, the second slot defining a receiver portion and a retention portion, wherein the receiver portion is sized to accommodate the flange portion of the stud of an interface structure and the retention portion is sized to accommodate the stem but not the flange portion of the stud. A first flexible cantilever is positioned at the first surface of the first piece of telecommunications equipment and a second flexible cantilever is positioned at the second opposing surface of the first piece of telecommunications equipment, each of the first and second cantilevers configured to abut a stud to prevent relative sliding between an interface structure and the first piece of telecommunications equipment. A cantilever release is provided for at least the first cantilever, wherein at least a portion of the cantilever release protrudes through the second surface so as to be able to flexibly move the first cantilever out of the way of a stud from an exterior of the second surface to enable slidable movement between the first piece of telecommunications equipment and an interface structure mounted to the first surface of the first piece of telecommunications equipment via the first slot.

According to another example aspect, the disclosure is directed to an arrangement comprising two first pieces of telecommunications equipment connected together with an interface structure connected to a first surface of one of the first pieces of telecommunications equipment and a second surface of the other of the first pieces of telecommunications equipment.

According to another example aspect, the disclosure is directed to a method of connecting two pieces of telecommunications equipment so as to prevent relative sliding between the two pieces of telecommunications equipment and relative separation between the two pieces of telecommunications equipment that is in a direction generally perpendicular to the direction of the relative sliding. The method comprises aligning a flange portion of a stud positioned at a first face of an interface structure with a receiver portion of a slot of a first piece of telecommunications equipment, passing the flange portion of the stud through the receiver portion of the slot, and sliding a stem portion of the stud through a retention portion of the slot to bring the flange portion out of alignment with the receiver portion of the slot. The method further comprises aligning a flange portion of a stud positioned at a second face of an interface structure with a receiver portion of a slot of a second piece of telecommunications equipment, passing the flange portion of the stud through the receiver portion of the slot of the second piece of telecommunications equipment, and sliding a stem portion of the stud through a retention portion of the slot to bring the flange portion out of alignment with the receiver portion of the slot of the second piece of telecommunications equipment. Further, relative sliding between the first and second pieces of telecommunications equipment are prevented by blocking the flange portions of the studs at the first and second faces of the interface structure so as to prevent sliding of the stem portions of the studs through the retention portions of the slots.

A variety of additional inventive aspects will be set forth in the description that follows. The inventive aspects can relate to individual features and combinations of features. It is to be understood that both the foregoing general description and the following detailed description are exemplary and explanatory only and are not restrictive of the broad inventive concepts upon which the embodiments disclosed herein are based.

### Brief Description of the Drawings

FIGS. 1 and 2 illustrate a piece of telecommunications equipment utilizing a modular connection system having features that are examples of inventive aspects in accordance with the present disclosure, wherein in FIG. 1, the telecommunications equipment is configured to receive another piece of equipment in an orientation that is perpendicular to that shown in FIG. 2;
FIG. 3 illustrates a portion of the telecommunications equipment of FIGS. 1-2 that includes the modular connection system of the present disclosure;
FIG. 4 illustrates the modular connection system of FIG. 3 with a cover of the system and an interface structure of the system removed, wherein the cover of the system may be provided as part of an outer wall of a piece of telecommunications equipment as will be described in further detail;
FIG. 5 illustrates the cover of the system of FIG. 4;
FIG. 6 illustrates the cover of the system of FIG. 4 with an interface structure connected to the cover;
FIG. 7 is a cross-section of the modular system taken along line 7-7 of FIG. 3;
FIG. 8 is a cross-section of the base of the modular system taken along line 8-8 of FIG. 4;
FIG. 9 is a cross-section of the modular system taken along line 9-9 of FIG. 3;
FIG. 10 is a top view of the base of the modular system;
FIG. 11 is a side view of the base of FIG. 10;
FIG. 12 is a cross-section of the base taken along line 12-12 of FIG. 10;
FIG. 13 is a cross-section of the base taken along line 13-13 of FIG. 10;
FIG. 14 is a top view of the cover of the modular system;
FIG. 15 is a bottom view of the cover of the modular system;
FIG. 16 is a cross-section of the cover taken along line 16-16 of FIG. 15;
FIG. 17 is a perspective view of one of the interface structures of the modular system;
FIG. 18 is a top view of the interface structure of FIG. 17;
FIG. 19 is a side view of the interface structure of FIG. 17;
FIG. 20 illustrates another version of the modular connection system having features that are examples of inventive aspects in accordance with the present disclosure, the modular connection system depicted as being used to stack two pieces of telecommunications equipment together;
FIG. 21 illustrates a side view of the modular connection system shown in FIG. 20; and
FIG. 22 illustrates a front view of the modular connection system shown in FIG. 20.

### Detailed Description

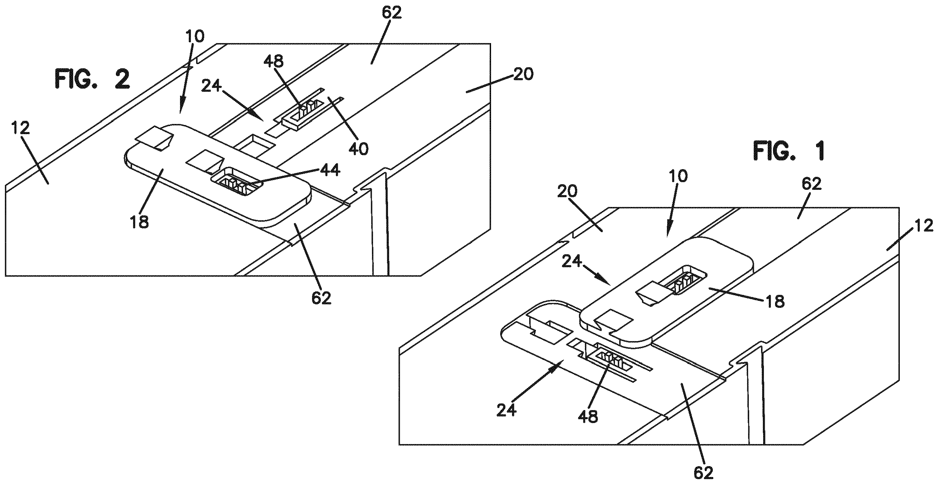

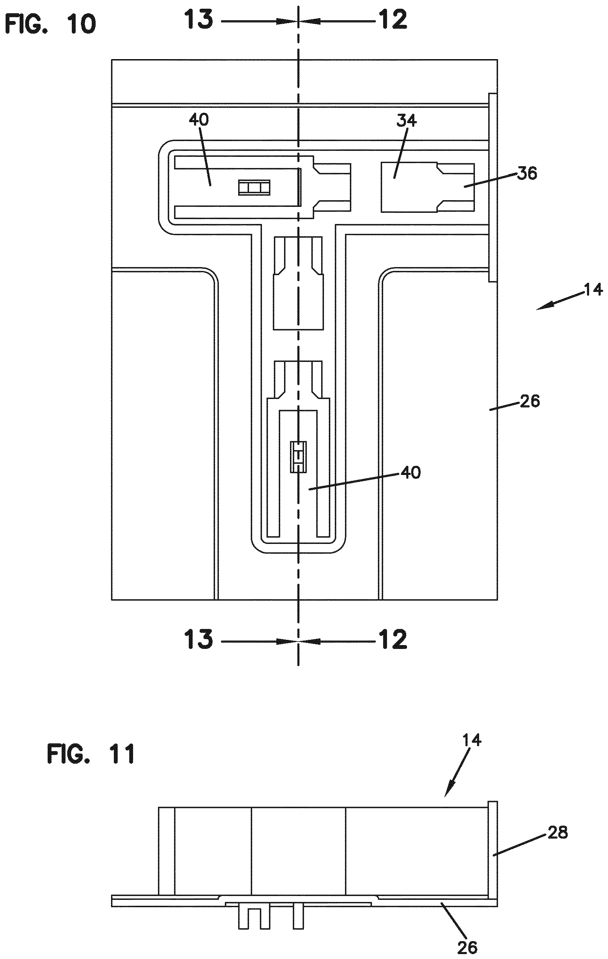

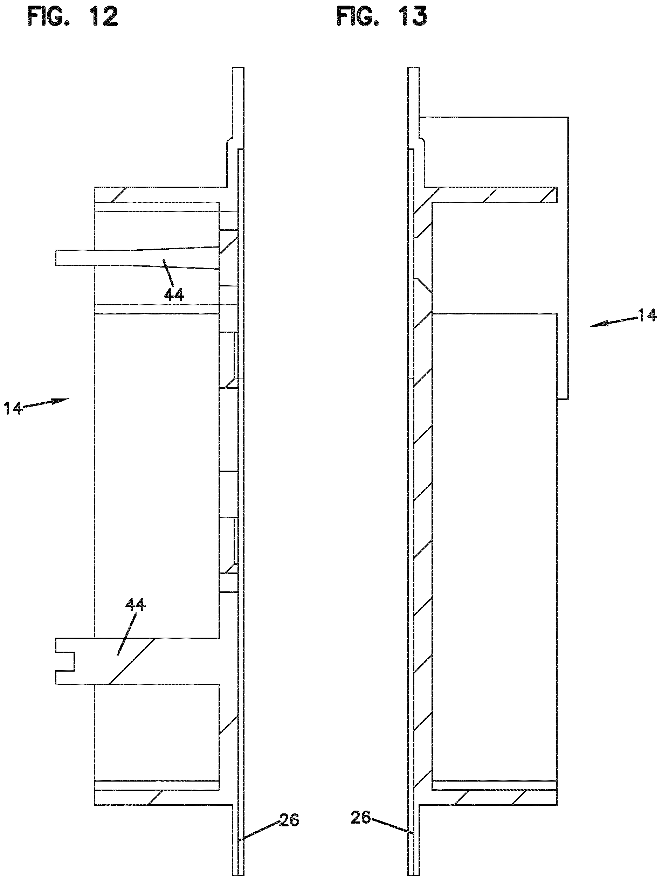

Referring now to Figures 1-19, an example embodiment of a modular connection system 10 for locking two pieces of telecommunications equipment so as to prevent relative sliding between the two pieces of telecommunications equipment and relative separation between the two pieces of telecommunications equipment that is in a direction generally perpendicular to the direction of the relative sliding is illustrated.

FIGS. 1 and 2 illustrate a piece of telecommunications equipment 12 utilizing the modular connection system 10, wherein in FIG. 1, the telecommunications equipment 12 is shown configured to receive another piece of equipment in an orientation that is perpendicular to that shown in FIG. 2.

As depicted in FIGS. 1 and 2, the modular connection system 10 may be provided such that portions of the system 10 can be formed integrally with the telecommunications equipment 12, wherein portions of the connection system 10 may be molded or fabricated with the equipment 12 itself. In other embodiments, portions of the modular connection system 10 may be provided as separate structures from the telecommunications equipment 12 and may be fixed or fastened thereto for use.

The modular connection system 10 generally includes a base structure 14, a cover structure 16, and an interface structure 18 that can intermate with either the base structure 14 or the cover structure 16 as will be described in further detail below.

As in the embodiment depicted in FIGS. 1-2, the cover 16 of the system 10 may be defined by an exterior wall 20 of a piece of telecommunications equipment such as equipment 12. The base 14 of the system 10 may be defined by another exterior wall of the equipment 12 that is opposing the wall 20 defined by the cover 16 or by an interior structure within the telecommunications equipment 12.

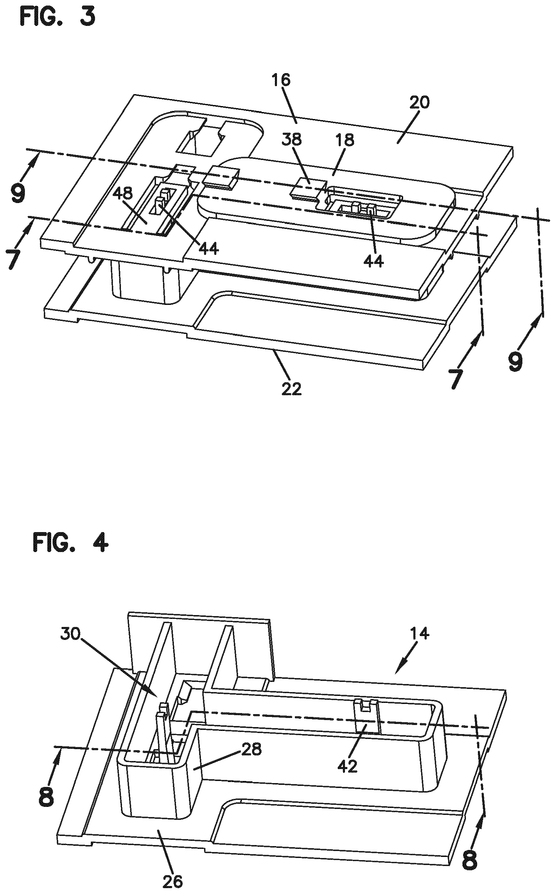

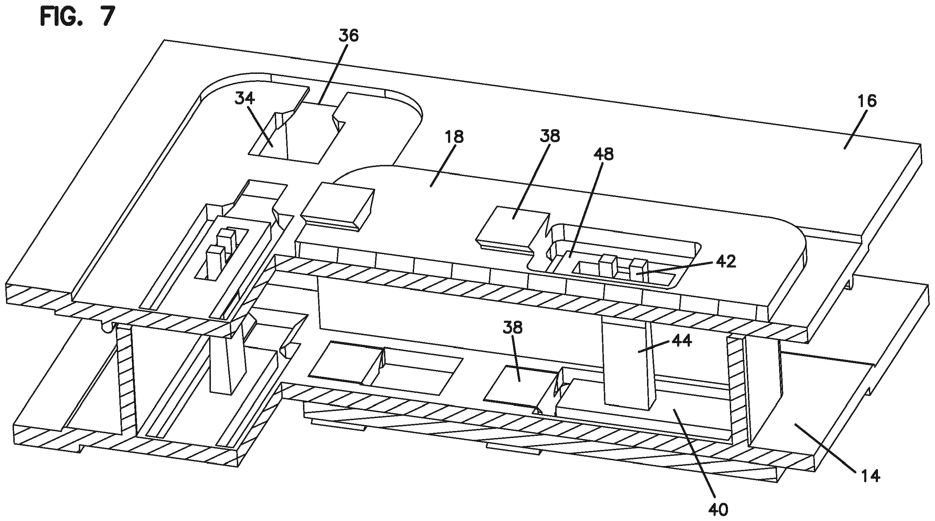

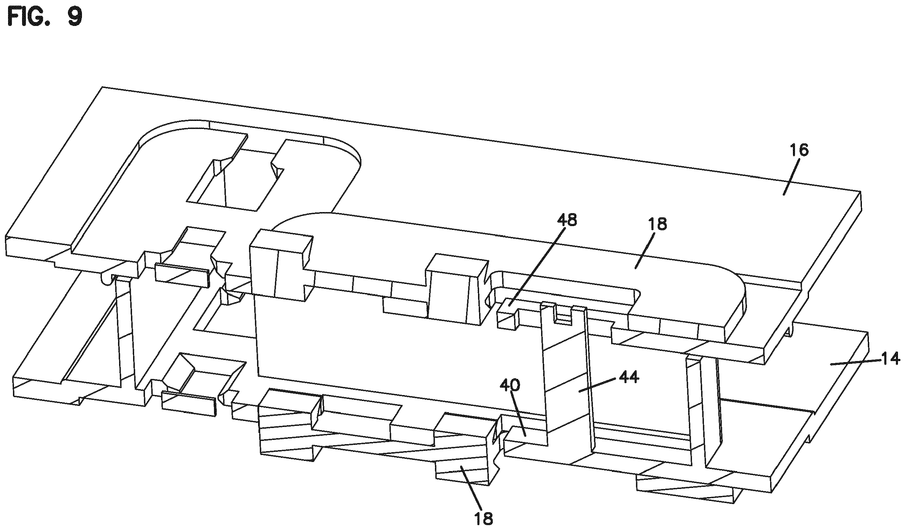

In FIGS. 3, 7, and 9, a portion of the telecommunications equipment 12 of FIGS. 1-2 that includes the modular connection system 10 is shown in isolation. As shown, the cover 16 may be defined by an outer wall 20 of the piece of equipment 12 and the base 14 may be defined by an opposing outer wall 22 thereof. As shown in FIG. 3 and as highlighted by the cross-sections shown in FIGS. 7 and 9, an interface structure 18 may intermate with the cover 16 defined by the top exterior wall 20 of the equipment 12 for connection to further equipment 12. Another interface structure 18 may intermate with the base 14 defined by the bottom exterior wall 22 of the equipment 12 for connection to further equipment 12.

As noted above, even though in the depicted equipment, the modular connection system 10 (specifically the base 14 and the cover 16) have been shown as having been formed integrally as parts of the equipment 12 itself, in other embodiments, the base 14 and the cover 16 may be structures that are separate from the equipment 12 and may be fixed to the equipment 12 for use as a retro-fit connection system.

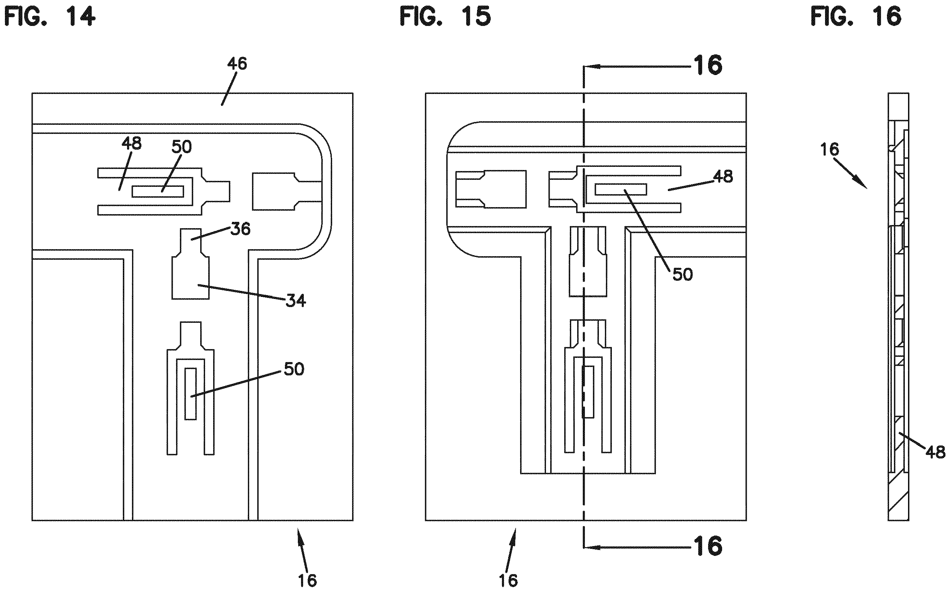

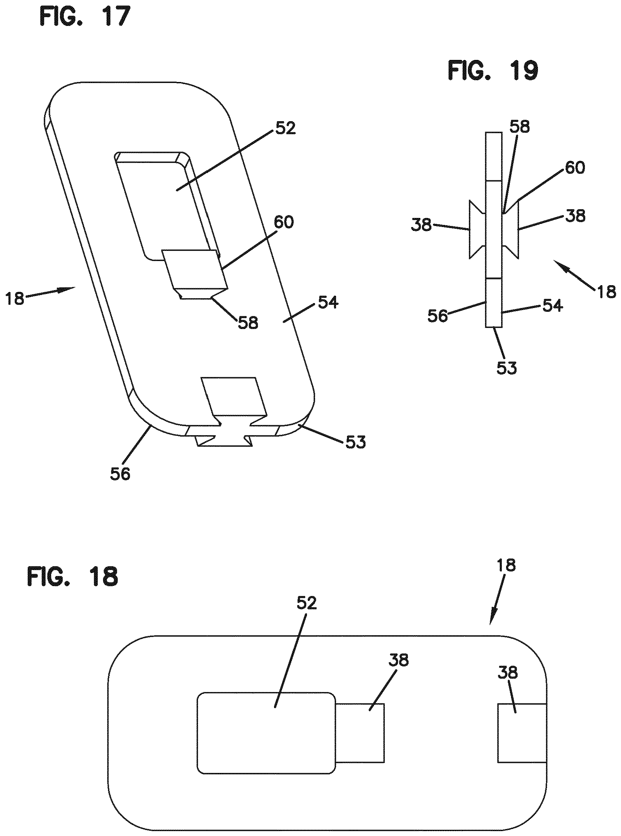

The base 14 of the modular connection system 10 is shown in isolation in FIGS. 4, 8, and 10-13. The cover 16 of the modular connection system 10 is shown in isolation in FIGS. 14-16. And, one of the interface structures 18 that can mate with either the cover 16 or the base 14 has been shown in isolation in FIGS. 17-19.

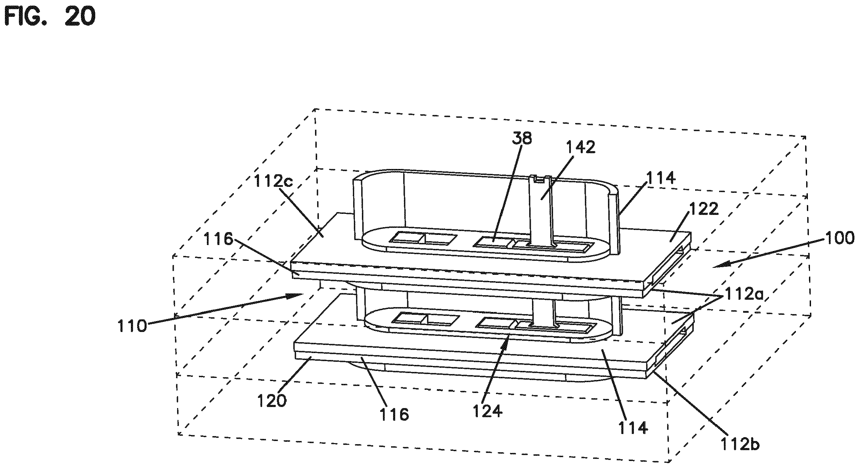

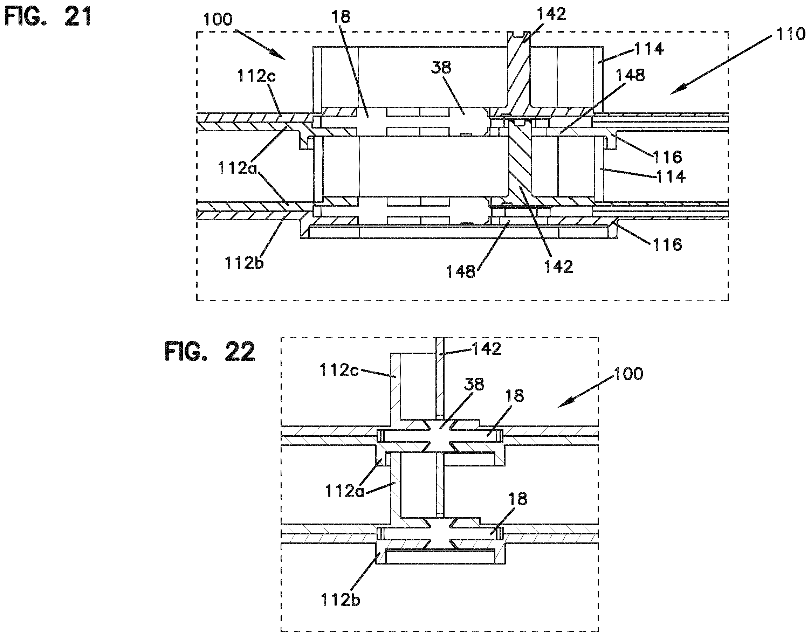

Even though the modular connection system 10 shown in FIGS. 1-19 is illustrated for allowing the interface structure 18 to be mounted in two different orientations for allowing further equipment 12 to be received in two different orientations (perpendicular to each other), in other embodiments, the modular connection system can be provided for a single mounting orientation. Such a system 110 is shown in FIGS. 20-22, wherein each base structure 114 and each cover structure 116 defines only a single slide lock mechanism 124. In the version shown in FIGS. 1-19, each base structure 14 and each cover structure 16 define two slide lock mechanisms 24, one perpendicular to the other. As will be described in further detail below, the slide lock mechanisms 24 illustrated are dovetail-based locking mechanisms. Other types of slide locks can be used.

Referring now to FIGS. 4, 8, and 10-13, the base 14 shown, as noted above, defines two different slide locks 24, for allowing equipment to be mounted in two different orientations, perpendicular to each other. However, in describing the features of the modular connection system 10, only one of the slide lock mechanisms 24 will be described with respect to the base 14 (and the cover 16), with the understanding that the features are fully applicable to the second slide lock mechanism 24 that is oriented perpendicular to the first slide lock mechanism 24.

The base 14 defines a bottom wall 26. A vertical wall 28 extends upwardly from the bottom wall 26 and surrounds an interface area 30. The vertical wall 28 can also provide the function of protecting optical fibers if the modular connection system 10 is used in fiber optic equipment. The vertical wall 28 can function to keep optical fibers out of the interface area 30.

Even though referred to as a "base," this term is not intended to be limiting and the base 14 can simply be formed as part of a wall 22 that is positioned opposite from another wall 20 defined by the cover 16 of the system.

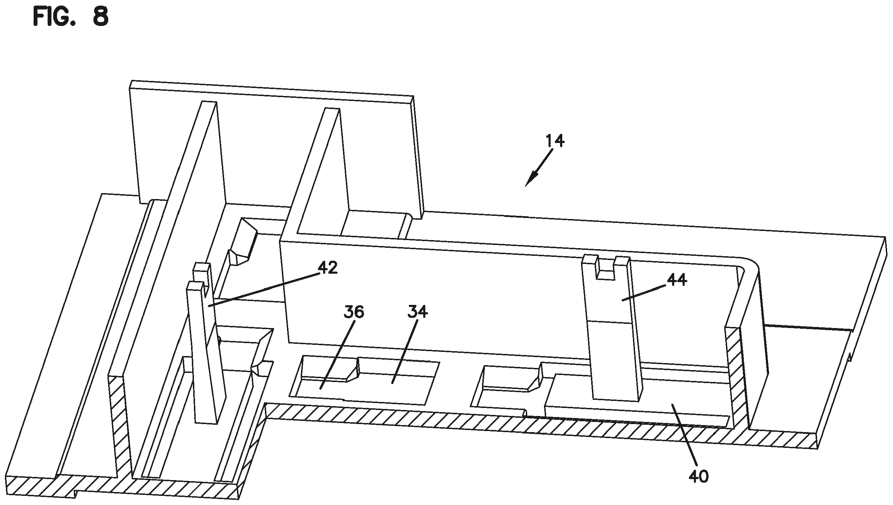

As shown in the cross-sectional view of FIG. 8, the bottom wall 26 defines a pair of slots 32. According to one example embodiment, the slots 32 are formed as dovetail receivers that form a part of a dovetail-based slide lock mechanism 24. Each dovetail receiver 32 includes a receiving portion 34 and a retention portion 36. The retention portion 36 defines a smaller opening than that provided by the receiving portion 34 and prevents transverse removal of a stud 38 in the form of a dovetail structure that has been slid from the receiving portion 34 to the retention portion 36.

In at least one of the dovetail receiver slots 32, the bottom wall 26 of the base 14 also defines a base cantilever 40. The base cantilever 40 covers at least a part of the receiving portion 34 of one of the dovetail receivers 32 and has to be flexibly moved out of the way before a dovetail (such as the dovetail 38 that is found on one of the interface structures 18) can enter into the receiving portion 34. The cantilever 40 is configured such that it can flex back into place after a dovetail 38 has entered the receiving portion 34 and has been slidably moved into the retention portion 36. Once a dovetail 38 is within the retention portion 36, the cantilever 40 limits or prevents slidable movement of the dovetail 38 from the retention portion 36 to the receiving portion 34.

As shown in FIGS. 4, 8, and 10-13, the cantilever 40 of the base 14 defines a cantilever release 42 in the form of a vertical tab 44 that extends upwardly from the cantilever 40. The cantilever release 42, as will be discussed in further detail below, is integrally formed with and is used to pull up on the cantilever 40 of the base 14 for moving it out of the way of a dovetail stud 38. If a dovetail stud 38 needs to be slidably moved from the retention portion 36 of the dovetail receiver 32 to the receiving portion 34, the cantilever release 42 can be used to pull up on the cantilever 40 and elastically flex it out of the way to allow the dovetail 38 to slide thereunder. Once the cantilever 40 is out of the way, the dovetail 38 can slide from the retention portion 36 to the receiving portion 34 and be moved transversely out of the receiving portion 34 to separate the dovetail 38 from the dovetail receiver slot 32, and thus, separating the interface structure 18 from the base 14.

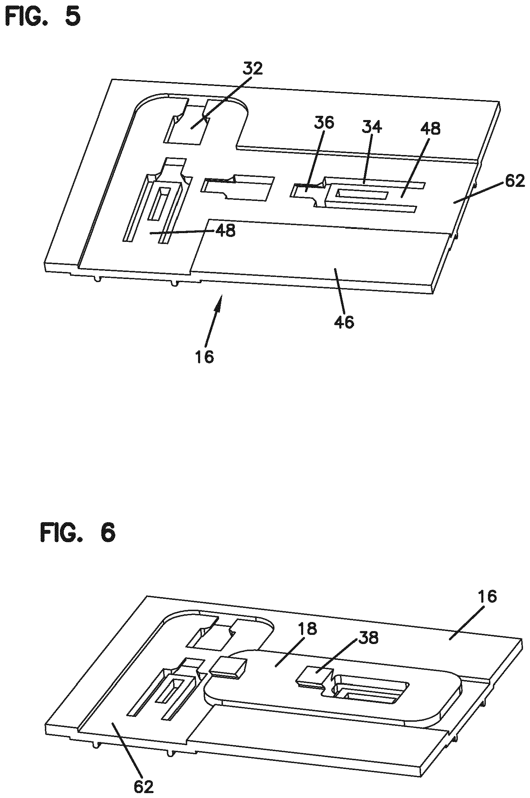

Referring now to FIGS. 5 and 14-16, the cover 16 of the modular connection system 10 is illustrated in isolation. Even though referred to as a "cover," this term is not intended to be limiting and the cover 16 can simply be formed as part of a wall 20 that is positioned opposite from another wall 22 defined by the base 14.

Similar to the base 14, the cover 16 defines a top wall 46. The top wall 46 also defines a cover cantilever 48. The cover cantilever 48 covers at least a part of the receiving portion 34 of one of the dovetail receivers 32 of the cover 16 and, similar to the base cantilever 40, has to be flexibly moved out of the way before a dovetail (such as the dovetail 38 that is found on one of the interface structures 18) can enter the receiving portion 34. The cantilever 48 is configured such that it can flex back into place after a dovetail 38 has entered the receiving portion 34 and has been slidably moved into the retention portion 36. Once a dovetail 38 is within the retention portion 36, the cantilever 48 limits or prevents slidable movement of the dovetail stud 38 from the retention portion 36 to the receiving portion 34. In FIG. 6, the cover 16 is shown with an interface structure 18 connected thereto.

As shown in FIGS. 5 and 14-16, the cover cantilever 48 defines a slit 50 through which the base cantilever release 42 can protrude through (e.g., when the base 14 and the cover 16 are positioned on opposite walls of a piece of telecommunications equipment 12). In this manner, when the cover 16 is positioned on top of the base 14 (or opposing the base 14), the base cantilever release 42 can be accessed for moving the base cantilever 40 and unlocking the base slide lock 24 (from an attached interface structure 18). Thus, by pulling up on the cantilever release 42 in a pivoting motion, and thus, flexing the base cantilever 40, the base structure 40 of the system 10 can be unlocked from a further piece of equipment without having to directly access the base cantilever 40. The height of the base cantilever release tab 44 and the slit 50 in the cover cantilever 48 (or the spacing between the bottom wall 22 defined by the base 14 and the top wall 20 defined by the cover 16) are configured accordingly to allow this access.

Referring now to FIG. 3, the cover 16 can be released from a piece of equipment attached to the cover 16 (via the interface structure 18) by pressing down on the cover cantilever 48 and flexing it inwardly. As shown, the interface structure 18 (details of which will be described in further detail below) defines an opening 52 through which the cover cantilever 48 can be accessed for pushing downwardly on the cantilever 48 in a pivoting motion.

Referring now to FIGS. 17-19, one of the interface structures 18 of the modular connection system 10 is illustrated. As shown in FIGS. 1-3 and 6, modular system 10 is configured such that an interface structure 18 can intermate with both a base 14 and a cover 16 for locking to further telecommunications equipment. The interface structure 18 makes it possible to use the system 10 of the present disclosure in a modular fashion where two or more piece of equipment 12, each defining a base 14 and cover 16, can be stacked. A stacked arrangement 100 is shown in the version of the modular system 110 of FIGS.20-22. As noted previously, the main difference between the system 110 shown in FIGS. 1-19 and the one shown in FIGS. 20-22 is that the system 10 of FIGS. 1-19 allows two different mounting orientations (90-degrees apart) while the system 110 of FIGS. 20-22 provides a single mounting orientation.

Still referring to FIGS. 17-19, each interface structure 18 defines a body 53 having a first face 54 and an opposing second face 56. The first and second faces 54, 56 are provided with similar features, including a pair of the studs 38 (e.g., dovetail-shaped) on each face 54, 56. Each dovetail shaped stud 38 defines a stem portion 58 and a flange portion 60 having a larger profile than the stem portion 58.

As noted above, the dovetail receiver slots 32 of the base 14 and the cover 16 are configured to receive the studs 38. The receiving portion 34 is sized to accommodate the flange portion 60 of the stud 38 and the retention portion 36 is sized to accommodate only the stem portion 58 but not the flange portion 60 of the stud 38.

The dovetail studs 38 on the first face 54 can mate with dovetail receivers 32 of either a base 14 or a cover 16 of a first piece of equipment 12, and the dovetail studs 38 on the opposing second face 56 of the interface structure 18 can mate with dovetail receivers 32 of a cover 16 or a base 14 of a second piece of equipment 12 that is to be connected to the first piece of equipment 12.

The interface structures 18 are configured as flat, planar structures and can be slidably inserted into slide grooves 62 defined by the base 14 and the cover 16. The interface structures 18 are configured to be positioned between a cover 16 of a first equipment 12 and a base 14 of a second equipment 12 and do not add to the thickness of the modular connection system 10. The body 53 of the interface structure 18 is housed completely between the corresponding slide grooves 62 of opposing cover and base structures 16, 14. And, the dovetails 38 of the interface structures 18 (specifically the flange portions 60), once slidably moved into the retention portions 36 of the dovetail receivers 32, are generally flush with the cantilevers 48, 40 of the cover 16 and base structures 14. The flange portions 60 of the dovetail studs 38 of the interface structures 18 are abutted by the cantilevers 40, 48 and do not protrude further than the cantilevers 40, 48.

As discussed previously, the opening 52 defined by the interface structure 18 (along with the slit 50 of the cover cantilever) allows access to a base cantilever release 42 even when the interface structure 18 has been mounted to the cover 16. In this manner, the cantilever 40 of a base 14 can be accessed from an exterior wall 20 defined by the cover 16, even if an interface structure 18 is positioned on the cover 16, to release the base 14 from another interface structure 18 that may be mated to the base 14.

An example use of the modular connection system in connecting or stacking two pieces of telecommunications equipment can be illustrated with reference to the version of the system 110 shown in FIGS. 20-22.

As shown in the version of the connection system 110 of FIGS. 20-22, a first interface structure 18 may be positioned between an upper cover 116 and an upper base 114 and a second interface structure 18 may be positioned between a lower base 114 and a lower cover 116. If the lower base 114 and the upper cover 116 are presumed to be parts of a first piece of telecommunications equipment 112a, FIGS. 20-22 illustrate how the system can be used to stack other pieces of equipment to the first piece of equipment 112a using the connection system 110 of the present disclosure. The lower cover 116 may be an exterior wall 120 of a second piece of telecommunications equipment 112b. The upper base 114 may be an exterior wall 122 of a third piece of telecommunications equipment 112c. In the depicted example, the third piece of equipment 112c can be separated from the first piece of equipment 112a by flexing upwardly the cantilever release 142 of the upper base 114 and sliding the two pieces of equipment 112a, 112c relative to each other. Then, the first interface structure 18 can be removed if desired from the first piece of equipment 112a by pressing the cantilever 148 of the upper cover 116 downwardly and sliding the first interface structure 18 relative to the first piece of equipment 112a.

If desired, the first piece of equipment 112a can be separated from the second interface structure 18 (and thus the second piece of equipment 112b) by flexing upwardly the cantilever release 142 of the lower base 114 and sliding the first piece of equipment 112a relative to the second interface structure 18.

Instead of unlocking the first and second pieces of equipment 112a, 112b by access from the top, the second piece of equipment 112b may also be separated from the first piece of equipment 112a if there is access to the lower cover 116 (that defines an exterior wall 120 of the second piece of equipment 112b) from a bottom side of the cover 116. The cantilever 148 of the lower cover 116 may simply be lifted upwardly and the lower cover 116 may be slidably moved with respect to the second interface structure 18 (and thus with respect to the first piece of equipment 112a).

As noted above, the modular connection systems 10/110 of the present disclosure may be provided integrally with the telecommunications equipment 12/112, wherein portions of the connection system 10/110 are molded or fabricated with the equipment 12/112 itself. In other embodiments, portions of the modular connection system 10/110 may be provided as separate structures from the telecommunications equipment 12/112 and may be fixed or fastened to the equipment 12/112 in accordance with methods known in the art. Whether integrally formed or separately attached, the modular connection system 10/110 allows two or more pieces of telecommunications equipment 12/112 to be connected or stacked with a quick-connect type coupling arrangement and provides for separation of the equipment 12/112 with a quick-release type arrangement as described herein.

Although in the foregoing description, terms such as "top," "bottom," "front," "back," "right," "left," "upper," and "lower" were used for ease of description and illustration, no restriction is intended by such use of the terms. The telecommunications devices described herein can be used in any orientation, depending upon the desired application.

Having described the preferred aspects and embodiments of the present disclosure, modifications and equivalents of the disclosed concepts may readily occur to one skilled in the art.

### Parts List

- 10: modular connection system
- 12: piece of telecommunications equipment
- 14: base structure
- 16: cover structure
- 18: interface structure
- 20: exterior wall
- 22: opposing exterior wall
- 24: slide lock
- 26: bottom wall
- 28: vertical wall
- 30: interface area
- 32: dovetail receiver/slot
- 34: receiving portion of slot
- 36: retention portion of slot
- 38: dovetail/stud
- 40: base cantilever
- 42: cantilever release
- 44: vertical tab
- 46: top wall
- 48: cover cantilever
- 50: slit
- 52: opening
- 53: body
- 54: first face
- 56: second face
- 58: stem portion of stud
- 60: flange portion of stud
- 62: slide groove
- 100: telecommunications arrangement
- 110: modular connection system
- 112a: first piece of telecommunications equipment
- 112b: second piece of telecommunications equipment
- 112c: third piece of telecommunications equipment
- 114: base structure
- 116: cover structure
- 120: exterior wall
- 122: exterior wall
- 124: slide lock
- 142: cantilever release of base
- 148: cantilever of cover

## Claims

1. A modular connection system (10/110) for connecting two pieces of telecommunications equipment (12/112) so as to prevent relative sliding between the two pieces of telecommunications equipment (12/112) and relative separation between the two pieces of telecommunications equipment (12/112) that is in a direction generally perpendicular to the direction of the relative sliding, the connection system (10/110) comprising:
an interface structure (18) to be positioned between the two pieces of telecommunications equipment (12/112), the interface structure (18) defining a body (53) with opposed faces (54, 56) and a stud (38) on each face (54, 56), the stud (38) defining a stem portion (58) and a flange portion (60) having a larger profile than the stem portion (58);
a first piece of telecommunications equipment (12/112);
a first slot (32) positioned at a first surface of the first piece of telecommunications equipment (12/112), the first slot (32) defining a receiver portion (34) and a retention portion (36), wherein the receiver portion (34) is sized to accommodate the flange portion (60) of the stud (38) of the interface structure (18) and the retention portion (36) is sized to accommodate the stem portion (58) but not the flange portion (60) of the stud (38);
a second slot (32) positioned at a second opposing surface of the first piece of telecommunications equipment (12/112), the second slot (32) defining a receiver portion (34) and a retention portion (36), wherein the receiver portion (34) is sized to accommodate the flange portion (60) of the stud (38) of the interface structure (18) and the retention portion (36) is sized to accommodate the stem (58) but not the flange portion (60) of the stud (38);
a first flexible cantilever (40) positioned at the first surface of the first piece of telecommunications equipment (12/112) and a second flexible cantilever (48/148) positioned at the second opposing surface of the first piece of telecommunications equipment (12/112), each of the first and second cantilevers (40, 48/148) configured to abut a stud (38) to prevent relative sliding between the interface structure (18) and the first piece of telecommunications equipment (12/112); and
a cantilever release (42/142) for at least the first cantilever (40), wherein at least a portion of the cantilever release (42/142) protrudes through the second surface so as to be able to flexibly move the first cantilever (40) out of the way of a stud (38) from an exterior of the second surface to enable slidable movement between the first piece of telecommunications equipment (12/112) and the interface structure (18) mounted to the first surface of the first piece of telecommunications equipment (12/112) via the first slot (32).

2. A modular connection system (10/110) according to claim 1, wherein the interface structure (18) includes a pair of studs (38) on each face (54/56).

3. A modular connection system (10/110) according to claim 2, wherein the first surface includes two first slots (32) and the second surface includes two second slots (32).

4. A modular connection system (10/110) according to claim 1, wherein the stud (38) is provided in the form of a dovetail structure.

5. A modular connection system (10/110) according to claim 4, wherein the slot (32) is configured in the form of a dovetail receiver structure.

6. A modular connection system (10/110) according to claim 1, wherein the cantilever release (42/142) is a tab (44) that extends from the first cantilever (40) at the first surface all the way through the second cantilever (48) located at the opposing second surface.

7. A modular connection system (10/110) according to claim 6, wherein the cantilever release (42/142) is accessible even when the interface structure (18) has been mounted to the second surface.

8. A modular connection system (10/110) according to claim 1, wherein the interface structures (18) can be used to stack two or more pieces of telecommunications equipment (12/112), each having at least one of the first slot (32) and the first cantilever (40) or the second slot (32) and the second cantilever (48/148).

9. A modular connection system (10/110) according to claim 1, wherein the first and second slots (32) and the first and second cantilevers (40, 48/148) are formed integrally with the first and second surfaces, respectively, of the first piece of telecommunications equipment (12/112).

## Patentansprüche

1. Ein modulares Verbindungssystem (10/110) zum Verbinden von zwei Stücken Telekommunikationsausrüstung (12/112), um relatives Gleiten zwischen den zwei Stücken Telekommunikationsausrüstung (12/112) und relative Trennung zwischen den zwei Stücken Telekommunikationsausrüstung (12/112), die in einer Richtung im Allgemeinen senkrecht zu der Richtung des relativen Gleitens stattfindet, zu verhindern, wobei das Verbindungssystem (10/110) Folgendes beinhaltet:
eine Schnittstellenstruktur (18), die zwischen den zwei Stücken Telekommunikationsausrüstung (12/112) positioniert werden soll, wobei die Schnittstellenstruktur (18) einen Körper (53) mit entgegengesetzten Flächen (54, 56) und einem Bolzen (38) auf jeder Fläche (54, 56) definiert, wobei der Bolzen (38) einen Stammabschnitt (58) und einen Flanschabschnitt (60) mit einem größeren Profil als der Stammabschnitt (58) definiert;
ein erstes Stück Telekommunikationsausrüstung (12/112);
einen ersten Schlitz (32), der an einer ersten Oberfläche des ersten Stücks Telekommunikationsausrüstung (12/112) positioniert ist, wobei der erste Schlitz (32) einen Aufnahmeabschnitt (34) und einen Fixierabschnitt (36) definiert, wobei der Aufnahmeabschnitt (34) bemessen ist, um den Flanschabschnitt (60) des Bolzens (38) der Schnittstellenstruktur (18) unterzubringen und der Fixierabschnitt (36) bemessen ist, um den Stammabschnitt (58), jedoch nicht den Flanschabschnitt (60) des Bolzens (38), unterzubringen;
einen zweiten Schlitz (32), der an einer zweiten entgegengesetzten Oberfläche des ersten Stücks Telekommunikationsausrüstung (12/112) positioniert ist, wobei der zweite Schlitz (32) einen Aufnahmeabschnitt (34) und einen Fixierabschnitt (36) definiert, wobei der Aufnahmeabschnitt (34) bemessen ist, um den Flanschabschnitt (60) des Bolzens (38) der Schnittstellenstruktur (18) unterzubringen und der Fixierabschnitt (36) bemessen ist, um den Stamm- (58), jedoch nicht den Flanschabschnitt (60) des Bolzens (38) unterzubringen;
einen ersten biegsamen Ausleger (40), der an der ersten Oberfläche des ersten Stücks Telekommunikationsausrüstung (12/112) positioniert ist, und einen zweiten biegsamen Ausleger (48/148), der an der zweiten entgegengesetzten Oberfläche des ersten Stücks Telekommunikationsausrüstung (12/112) positioniert ist, wobei jeder des ersten und zweiten Auslegers (40, 48/148) konfiguriert ist, um an einen Bolzen (38) anzustoßen, um das relative Gleiten zwischen der Schnittstellenstruktur (18) und dem ersten Stück Telekommunikationsausrüstung (12/112) zu verhindern; und
eine Auslegerfreigabe (42/142) für mindestens den ersten Ausleger (40), wobei mindestens ein Abschnitt der Auslegerfreigabe (42/142) so durch die zweite Oberfläche stößt, um den ersten Ausleger (40) biegsam aus dem Weg eines Bolzens (38) von einem Äußeren der zweiten Oberfläche bewegen zu können, um die gleitbare Bewegung zwischen dem ersten Stück Telekommunikationsausrüstung (12/112) und der Schnittstellenstruktur (18), die an der ersten Oberfläche des Stücks Telekommunikationsausrüstung (12/112) über den ersten Schlitz (32) montiert ist, zu ermöglichen.

2. Modulares Verbindungssystem (10/110) gemäß Anspruch 1, wobei die Schnittstellenstruktur (18) ein Paar Bolzen (38) auf jeder Fläche (54/56) umfasst.

3. Modulares Verbindungssystem (10/110) gemäß Anspruch 2, wobei die erste Oberfläche zwei erste Schlitze (32) umfasst und die zweite Oberfläche zwei zweite Schlitze (32) umfasst.

4. Modulares Verbindungssystem (10/110) gemäß Anspruch 1, wobei der Bolzen (38) in Form einer Schwalbenschwanzstruktur bereitgestellt ist.

5. Modulares Verbindungssystem (10/110) gemäß Anspruch 4, wobei der Schlitz (32) in Form einer Schwalbenschwanzaufnahmestruktur konfiguriert ist.

6. Modulares Verbindungssystem (10/110) gemäß Anspruch 1, wobei die Auslegerfreigabe (42/142) ein Dorn (44) ist, der sich von dem ersten Ausleger (40) an der ersten Oberfläche vollständig durch den zweiten Ausleger (48), der sich an der entgegengesetzten zweiten Oberfläche befindet, erstreckt.

7. Modulares Verbindungssystem (10/110) gemäß Anspruch 6, wobei auf die Auslegerfreigabe (42/142) sogar dann zugegriffen werden kann, wenn die Schnittstellenstruktur (18) an der zweiten Oberfläche montiert worden ist.

8. Modulares Verbindungssystem (10/110) gemäß Anspruch 1, wobei die Schnittstellenstrukturen (18) verwendet werden können, um zwei oder mehr Stücke Telekommunikationsausrüstung (12/112) zu stapeln, wobei jedes mindestens einen des ersten Schlitzes (32) und des ersten Auslegers (40) oder des zweiten Schlitzes (32) und des zweiten Auslegers (48/148) aufweist.

9. Modulares Verbindungssystem (10/110) gemäß Anspruch 1, wobei der erste und zweite Schlitz (32) und der erste und zweite Ausleger (40, 48/148) integral mit der ersten bzw. der zweiten Oberfläche des ersten Stücks Telekommunikationsausrüstung (12/112) gebildet sind.

## Revendications

1. Un système de connexion modulaire (10/110) pour connecter deux pièces d'équipement de télécommunications (12/112) de manière à empêcher un glissement relatif entre les deux pièces d'équipement de télécommunications (12/112) et une séparation relative entre les deux pièces d'équipement de télécommunications (12/112) qui est dans une direction généralement perpendiculaire à la direction du glissement relatif, le système de connexion (10/110) comprenant :
une structure d'interface (18) devant être positionnée entre les deux pièces d'équipement de télécommunications (12/112), la structure d'interface (18) définissant un corps (53) avec des faces opposées (54, 56) et un appendice (38) sur chaque face (54, 56), l'appendice (38) définissant une portion de tige (58) et une portion de flasque (60) présentant un profil plus grand que la portion de tige (58) ;
une première pièce d'équipement de télécommunications (12/112) ;
une première encoche (32) positionnée au niveau d'une première surface de la première pièce d'équipement de télécommunications (12/112), la première encoche (32) définissant une portion de récepteur (34) et une portion de rétention (36), où la portion de récepteur (34) est dimensionnée afin d'accueillir la portion de flasque (60) de l'appendice (38) de la structure d'interface (18) et la portion de rétention (36) est dimensionnée afin d'accueillir la portion de tige (58) mais pas la portion de flasque (60) de l'appendice (38) ;
une deuxième encoche (32) positionnée au niveau d'une deuxième surface opposée de la première pièce d'équipement de télécommunications (12/112), la deuxième encoche (32) définissant une portion de récepteur (34) et une portion de rétention (36), où la portion de récepteur (34) est dimensionnée afin d'accueillir la portion de flasque (60) de l'appendice (38) de la structure d'interface (18) et la portion de rétention (36) est dimensionnée afin d'accueillir la portion de tige (58) mais pas de flasque (60) de l'appendice (38) ;
un premier élément en porte à faux flexible (40) positionné au niveau de la première surface de la première pièce d'équipement de télécommunications (12/112) et un deuxième élément en porte à faux (48/148) positionné au niveau de la deuxième surface opposée de la première pièce d'équipement de télécommunications (12/112), chacun des premier et deuxième éléments en porte à faux (40, 48/148) étant configuré pour s'abouter à un appendice (38) afin d'empêcher un glissement relatif entre la structure d'interface (18) et la première pièce d'équipement de télécommunications (12/112) ; et
un dispositif de dégagement (42/142) pour au moins le premier élément en porte à faux (40), où au moins une portion du dispositif de dégagement d'élément en porte à faux (42/142) fait saillie à travers la deuxième surface de manière à pouvoir écarter de façon flexible le premier élément en porte à faux (40) d'un appendice (38) depuis un extérieur de la deuxième surface afin de rendre un mouvement par glissement possible entre la première pièce d'équipement de télécommunications (12/112) et la structure d'interface (18) montée sur la première surface de la première pièce d'équipement de télécommunications (12/112) par le biais de la première encoche (32).

2. Un système de connexion modulaire (10/110) selon la revendication 1, où la structure d'interface (18) inclut une paire d'appendices (38) sur chaque face (54/56).

3. Un système de connexion modulaire (10/110) selon la revendication 2, où la première surface inclut deux premières encoches (32) et la deuxième surface inclut deux deuxièmes encoches (32).

4. Un système de connexion modulaire (10/110) selon la revendication 1, où l'appendice (38) est fourni sous la forme d'une structure en queue d'aronde.

5. Un système de connexion modulaire (10/110) selon la revendication 4, où l'encoche (32) est configurée sous la forme d'une structure de récepteur en queue d'aronde.

6. Un système de connexion modulaire (10/110) selon la revendication 1, où le dispositif de dégagement d'élément en porte à faux (42/142) est une patte (44) qui s'étend tout du long depuis le premier élément en porte à faux (40) au niveau de la première surface jusqu'à travers le deuxième élément en porte à faux (48) situé au niveau de la deuxième surface opposée.

7. Un système de connexion modulaire (10/110) selon la revendication 6, où le dispositif de dégagement d'élément en porte à faux (42/142) est accessible même lorsque la structure d'interface (18) a été montée sur la deuxième surface.

8. Un système de connexion modulaire (10/110) selon la revendication 1, où les structures d'interface (18) peuvent être utilisées afin d'empiler deux pièces d'équipement de télécommunications (12/112) ou plus, chacune présentant au moins soit la première encoche (32) et le premier élément en porte à faux (40), soit la deuxième encoche (32) et le deuxième élément en porte à faux (48/148).

9. Un système de connexion modulaire (10/110) selon la revendication 1, où les première et deuxième encoches (32) et les premier et deuxième éléments en porte à faux (40, 48/148) sont formés de façon solidaire avec les première et deuxième surfaces, respectivement, de la première pièce d'équipement de télécommunications (12/112).
